Europäisches Patentamt

**European Patent Office**

Office européen des brevets

(19)

(11) Publication number: **0 162 816**

**A1**

(12)

# EUROPEAN PATENT APPLICATION

(21) Application number: **85830105.4**

(22) Date of filing: **03.05.85**

(51) Int. Cl.⁴: **F 16 H 27/04**
**F 16 H 1/16**

(30) Priority: **08.05.84 IT 939284**

(43) Date of publication of application:
**27.11.85 Bulletin 85/48**

(84) Designated Contracting States:
**AT BE CH DE FR GB LI NL SE**

(71) Applicant: **Gonzi, Mario**
**Via Montarfoni 65**
**I-52020 Ponticini-Laterina (Arezzo)(IT)**

(72) Inventor: **Gonzi, Mario**
**Via Montarfoni 65**
**I-52020 Ponticini-Laterina (Arezzo)(IT)**

(74) Representative: **Mannucci, Gianfranco, Dott.-Ing.**
**Ufficio Tecnico Ing. A. Mannucci Via della Scala 4**
**I-50123 Firenze(IT)**

(54) Actuator of cyclic rapid motion, with two members rotating according to skew axes.

(57) The actuator comprises a driving member rotating at constant speed and a driven member, also rotating around a skew axis; the connection is effected with one (5) of the two members being provided with a profile with channels (7) in the form of variable-pitch helix and being shaped and with the other member (1) being provided with angularly distributed pegs (3), which engage one after the other the channels (7) of the first member (5).

Fig. 2

SPECIFICATION

The object of the invention is to provide an actuator of cyclic motion which offers particular kinematic characteristics and results of simple construction while offering wide possibilities of actuating variable motions as it will be apparent from the following text.

Substantially, the actuator of cyclic variable rapid motion according to the invention comprises a driving member with constant rotation speed and a driven member also rotating around an axis skew respect to the driving member axis, and it is characterized by the fact that one of the two rotating members is provided with a profile with variable-pitch helix-like and shaped channels, and the other of the two members is provided with radial pegs angularly distributed which engage one after the other the variable-pitch helix-shaped channels of the first member.

One of the two members rotates – in one practical embodiment of the invention – around an axis lying on a plane at right angle to the axis of the other member.

The actuator is characterized by a continuous motion variable in a cyclic way and repeted upon each revolution of the driving member.

Each channel of the member with shaped channels is developed with each end inclined like the corresponding end of the adjacent channel, and the pegs are predisposed so as to engage each channel just a moment before an adjacent peg leaves a corresponding adjacent channel.

The member with variable-pitch helix-shaped channels may have a toric annular groove-like perifery, with the section through an axial plane corresponding to the convex section of the member provided with radial pegs; the helix-like channels with variable inclination being developed along the groove between the borders of same groove.

The invention will be better understood by a reading of the following description in conjunction with the accompanying drawing which shows a practical non limitative exemplification of same invention. In the drawing:

Figs. 1 and 2 show two orthogonal views, according

to the two axes of the rotating members;

Fig. 3 shows a development of the member with channels.

According to which is illustrated in the accompanying drawing, numeral 1 indicates a rotating member substantially cylindrical, which characteristically is provided with a plurality of rollers or pegs 3 (three at least) of circular section, or equivalent projections, which are distributed along a circumference at constant angular distances. In the drawing, four rollers or pegs 3 are provided, but this number may vary even to a minimum of three (for construction requirements). The rotating member 1 is movable according to axis A-A.

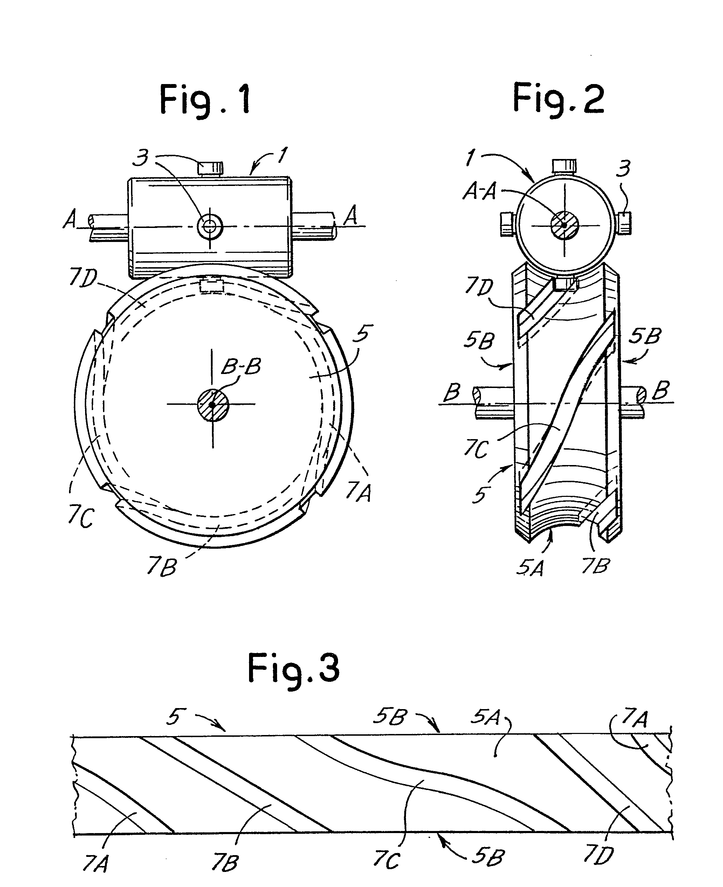

Numeral 5 indicates a second helicoid-shaped member, rotating according to the axis B-B, which is at right angle to a plane containing the axis A-A and is contained in a plane which contains the radial axes of pegs 3. The rotating member 5 is substantially disk-like developed with a perimetric groove 5A which has toric profile and is developed to match with the perifery of the rotating member 1. Characteristically, in the surface 5A of the member 5, which is shown developed in Fig. 3, multiple channels are formed indicated by 7A, 7B, 7C, 7D in the drawing, having various and variously inclined profiles between the circular surfaces 5B delimitating the disk-like member 5, between which the above channels develop. The channels 7 are so shaped in their section as to cooperate with the rollers or pegs 3 ensuring, in particular, the mutual contact of the pegs with one of the channel borders without contact with the other border, but with an appreciably limited clearance to avoid a slack in the coupling between members 1 and 5.

As can be seen in particular in Fig. 3, each length of channel between those 7A, 7B, 7C, 7D has an inclination either fixed or variable respect to a tangential direction. Each of the channel ends has a limited superimposition with the adjacent channels, and moreover,

-3-

the disposition and interspace of pegs or rollers 3 is
such that there is ensured a continuous connection between
the members 1 and 5 of the actuator, since a peg engages
a channel just before another peg, already engaging the
adjacent channel, will leave it; obviously, during the
short periods of superimposition of contacts by two adjacent
pegs 3, the law of motion and thus the inclination of
the end of a channel 7 and the one of the beginning of
the another adjacent channel 7 must be equal. The simultaneous
engagement of the two pegs takes place in an angular
range of about 3-5 degrees.

As can be seen in the drawing, owing to the different
profiles of channels 7A, 7B, 7C, 7D, a continuous and
uniform motion of the member 1 (input motion) is transformed
in a continuous cyclic motion which is repeted upon
each revolution of the driven member 5, from which an output
of the motion is obtained with variable speed during
each cycle according to variations which depend on the
profiling of channels 7. It is also possible to have
a temporary stopping of the motion and even accelerations
and decelerations which may be imposed by the profiling
of the channels.

The actuator can be carried out both in the embodiment
in which a constant input of motion of the member 1 with
an output of continuous motion at variable speed on

-4-

the axis B-B of the member 5 will result, and vice versa, with the input of a constant motion in the member 5 and the output from the member 1 of a continuously variable motion. There is obtained, therefore, an endless motion varying in a cyclic way.

In case the member 5 is the driving element, it may be also provided at least a length of channel along a circumference in order to obtain a temporary stopping of the driven member 1, within the working cycle. A channel may be also provided which operates a temporary reversal of the motion.

Qualifying features of the actuator of rapid endless motion according to the invention are the following ones:

1) Utilization of 360° of the helicoid member 5 for developing the variable motion;

2) repetition of the variable motion without reversal of motion;

3) slowing down, dwells and constant speeds distributed at will along the 360 degrees;

4) no presence of slides with longitudinal movement;

5) essentiality of the components making up the actuator;

6) construction semplicity of the actuator as a whole;

7) reduced overall dimensions respect to the installed power;

8) reversibility or irreversibility at will;

9) reducing effect at will between absolute (that is, complete) rotation at the input, and absolute rotation at the output;

10) possibility of a complete equipment in case of mass--production, leaving as last operation the personalization of the motions on the series of already pre-assembled products.

The actuator in object has a schematic resemblance with a worm reduction unit and has a high mechanical efficiency. Its principle is suitable for applications both with very small and very high output torque. In the design it is possible to subdivide the round angle in "n" portions being equal or different between them.

Respect to the present day constructions, the actuator in object offers:

- no presence of the bond of round angle subdivision in equal portions submultiple of 360°;

- heterogeneity or equality of motions between a station and the other;

- suitability for "n" devices to be mounted in parallel with concordant or discordant motion;

- suitability for "n" devices to be mounted branched off with concordant or combined at will motions.

Among the potential specific applications of the actuator in object, the following ones can be indicated:

tilters of any range within 360°; positioners with homogenous and/or non-homogenous pitches present in the same actuator; transfer of trucks or slides included in automatic groups; rigid and/or flexible conveyances;

linear pushers and/or tractors; impulse-like advancements;

assembly plants and machines; horizontal and vertical conveyors; rigidly synchronized motions; precise motions with "zero" clearance; motions in which it is necessary to have a whatever variable effort; rapid motions in which the optimization of the power is required; precision

automatic reference devices; precise rapid inserting

units motions for telescopic forks; lifting cells; batteries for multiple motions; mechanical presses; flags rotation;

mechanical shearing, riveting and coining; opening and closing of gripping pliers; blocks and mechanical escapements for automation; oscillating and vibrating systems; impulsion controls; motions with constant power;

rapid accelerators of rotating or translating masses;

progressive decelerators of rotating or translating masses; combined kinematic means operating at high frequency;

rapid interlocking of rigid motions with flexible manipulators.

Substantially, the actuator may be utilized for any kind of motion where it is necessary to comply with a predetermined ramp of acceleration and/or deceleration or approach.

It should be understood that the drawing shows only an exemplification of the invention which may vary in the forms and dispositions.

## CLAIMS

1. Actuator of cyclic variable rapid motion, including a driving member with constant rotation speed and a driven member also rotating around an axis skew respect to the driving member axis, characterized by the fact that one (5) of the two rotating members is provided with a profile with variable-pitch helix-like and shaped channels (7), and the other member (1) is provided with radial pegs (3) angularly distributed which engage one after the other the variable-pitch helix-like channels (7) of the first member (5).

2. Actuator according to claim 1, characterized by the fact that one of the members rotates according to an axis lying in a plane at right angle to the axis of the other member.

3. Actuator according to preceding claims, characterized by a continuous motion varying in a cyclic way repeted upon each revolution of the driving member.

4. Actuator according to the preceding claims, characterized by the fact that each channel (7) of the member (5) with shaped and/or variable-pitch channels (7) is developed with each of the end parts inclined like the corresponding end part of the adjacent channel (7), and the pegs (3) are predisposed so that to engage each one channel (7) just a moment before an adjacent peg (3) leaves a corresponding adjacent channel.

5. Actuator according to the preceding claims, characterized by the fact that the member (5) with variable-pitch helix-like channels (7) has a toric annular-like groove (5A) with a section through an axial plane corresponding to the convex section of the member (1) provided with radial pegs (3); the variable-inclination helix-like channels (7) being developed along the groove (5A) between the borders of the same.

6. Actuator according to the preceding claims, characterized by the fact that the pegs (3) are at least three and may be developed as rollers.

7. Actuator according to the preceding claims, in which the driving member is the member (5) with channels, characterized by the fact that one channel (7) has a circumferential length and/or a shaping with reverse inclinations in order to obtain stoppings and/or reversals of the driven member motion.

8. Actuator of rapid cyclic motion, with two members rotating around skew axes; all as above described and illustrated for exemplification in the accompanying drawing.

## Fig.1

## Fig.2

## Fig.3

European Patent
Office

**EUROPEAN SEARCH REPORT**

0162816

Application number

EP 85 83 0105

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 597 990 (J. McCARTIN) <br> * Column 2, line 44 - column 3, line 5; figures 1-3 * | 1-3 | F 16 H 27/04 <br> F 16 H 1/16 |
| X | GB-A- 296 828 (STANLEY DUNLOP) <br> * Whole document * | 1 | |
| A | | 2-7 | |
| A | ANTRIEBSTECHNIK, vol. 323, June 1972, page 228; <br> * Figure 19, "Schrittgetriebe" * | 1-8 | |
| A | US-A-3 049 017 (J. MacDONALD) <br> * Whole document * | 1 | |
| A | DE-C- 15 910 (A. DELCEY) | | TECHNICAL FIELDS SEARCHED (Int. Cl.4) <br><br> F 16 H |
| A | DE-C- 212 725 (A. EISOLD) | | |
| A | FR-A- 494 196 (L. RENAULT) | | |

The present search report has been drawn up for all claims

| Place of search <br> THE HAGUE | Date of completion of the search <br> 07-08-1985 | Examiner <br> VOGT-SCHILB G.J.F. |
|---|---|---|